# EUROPEAN PATENT APPLICATION

(11) **EP 4 697 576 A1**
(43) Date of publication of application: **18.02.2026**
(21) Application number: 25152500.2
(22) Date of filing: 17.01.2025
(51) Int. Cl.: H02M 1/14, H02M 1/15, H02M 1/10, H02M 1/42, H02M 3/158, H02M 1/00

(54) **LOW-FREQUENCY RIPPLE CURRENT CANCELLATION CIRCUIT AND POWER SYSTEM WITH LOW-FREQUENCY RIPPLE CURRENT CANCELLATION FUNCTION**

(30) Priority: 14.08.2024 CN 202411112568
(71) Applicant: DELTA ELECTRONICS, INC., Taoyuan City 320023 (TW)
(72) Inventor: LI, Sheng-Hua, 320023 Chungli Dist.,Taoyuan City (TW)
(74) Representative: 2K Patentanwälte Blasberg Kewitz & Reichel

(57) **Abstract**

A low-frequency ripple current cancellation circuit (10) includes a first step-up circuit (11) and a second step-up circuit (12). The first step-up circuit (11) includes a first inductor (L₁), a first switch assembly (S₁), and a first capacitor (C₁), wherein the first switch assembly (S₁) includes a first switch (S₁₁) and a second switch (S₁₂). The second step-up circuit (12) includes a second inductor (L₂), a second switch assembly (S₂), and a second capacitor (C₂), wherein the second switch assembly (S₂) includes a third switch (S₂₁) and a fourth switch (S₂₂). The low-frequency ripple current cancellation circuit (10) receives a DC current (i_{dc}) with a ripple component (Iᵣᵢₚ), and the ripple component (Iᵣᵢₚ) is cancelled by the first step-up circuit (11) and the second step-up circuit (12).

## Description

### BACKGROUND

### Technical Field

The present disclosure relates to a current cancellation circuit and a power system with a current cancellation function, and more particularly to a low-frequency ripple current cancellation circuit and a power system with a low-frequency ripple current cancellation function.

### Description of Related Art

The statements in this section merely provide background information related to the present disclosure and do not necessarily constitute prior art.

With the rise of awareness of environmental protection and green energy, the sales of electric vehicles are doubling and the demand for the construction of charging stations is increasing. The objective of technicians in this field is to achieve the ability to respond to the charging requirements of electric vehicles and provide both overall power efficiency and charging quality.

Therefore, how to design a low-frequency ripple current cancellation circuit and a power system with a low-frequency ripple current cancellation function to solve the problems and technical bottlenecks in the existing technology has become a critical topic in this field.

### SUMMARY

An objective of the present disclosure is to provide a low-frequency ripple current cancellation circuit. The low-frequency ripple current cancellation circuit includes a first step-up circuit and a second step-up circuit. The first step-up circuit includes a first inductor, a first switch assembly, and a first capacitor. The first inductor includes a first terminal and a second terminal, and the first terminal of the first inductor is connected to a first DC side. The first switch assembly includes a first switch and a second switch. The first switch includes a first terminal and a second terminal. The first terminal of the first switch is connected to the second terminal of the first inductor, and the second terminal of the first switch is connected to an equal-potential node. The second switch includes a first terminal and a second terminal. The first terminal of the second switch is connected to the second terminal of the first inductor. The first capacitor includes a first terminal and a second terminal. The first terminal of the first capacitor is connected to the second terminal of the second switch, and the second terminal of the first capacitor is connected to the equal-potential node. The second step-up circuit includes a second inductor, a second switch assembly, and a second capacitor. The second inductor includes a first terminal and a second terminal, and the first terminal of the second inductor is connected to a second DC side. The second switch assembly includes a third switch and a fourth switch. The third switch includes a first terminal and a second terminal. The first terminal of the third switch is connected to the second terminal of the second inductor, and the second terminal of the third switch is connected to the equal-potential node. The fourth switch includes a first terminal and a second terminal, and the first terminal of the fourth switch is connected to the second terminal of the second inductor. The second capacitor includes a first terminal and a second terminal. The first terminal of the second capacitor is connected to the second terminal of the fourth switch, and the second terminal of the second capacitor is connected to the equal-potential node. The low-frequency ripple current cancellation circuit receives a DC current with a ripple component, and the ripple component is cancelled by the first step-up circuit and the second step-up circuit.

Another objective of the present disclosure is to provide a power system with a low-frequency ripple current cancellation function. The power system includes three single-phase AC-to-DC conversion circuits and a low-frequency ripple current cancellation circuit. Each AC-to-DC conversion circuit is correspondingly coupled to each phase of a three-phase AC power supply, and an output side of the AC-to-DC conversion circuit is connected to an output node and a DC current outputted from the output node. The low-frequency ripple current cancellation circuit includes a first step-up circuit and a second step-up circuit. The first step-up circuit includes a first inductor, a first switch assembly, and a first capacitor. The first switch assembly includes a first switch and a second switch. The first inductor is connected to the first switch at a first common node, and is connected between a first DC side and an equal-potential node. The second switch is connected to the first capacitor in series, and is connected between the first common node and the equal-potential node. The second step-up circuit includes a second inductor, a second switch assembly, and a second capacitor. The second switch assembly includes a third switch and a fourth switch. The second inductor is connected to the third switch at a second common node, and is connected between a second DC side and the equal-potential node. The fourth switch is connected to the second capacitor in series, and is connected between the second common node and the equal-potential node.

Accordingly, the low-frequency ripple current cancellation circuit and the power system with the low-frequency ripple current cancellation function are disclosed to achieve the following features and advantages: 1. By using the low-frequency ripple current cancellation circuit, the system efficiency can be maintained during light load requirements, and cancel the ripple component of the DC current so that the output current flowing to the load is a DC current without the ripple component; 2. By using the simple circuit design and control, the low-frequency ripple current cancellation circuit can be implemented.

It is to be understood that both the foregoing general description and the following detailed description are exemplary, and are intended to provide further explanation of the present disclosure as claimed. Other advantages and features of the present disclosure will be apparent from the following description, drawings, and claims.

### BRIEF DESCRIPTION OF DRAWINGS

The present disclosure can be more fully understood by reading the following detailed description of the embodiment, with reference made to the accompanying drawing as follows:
FIG. 1 is a block circuit diagram of multiple single-phase AC-to-DC conversion circuits according to a first embodiment of the present disclosure.
FIG. 2 is a block circuit diagram of multiple single-phase AC-to-DC conversion circuits according to a second embodiment of the present disclosure.
FIG. 3 is a block circuit diagram of three single-phase AC-to-DC conversion circuits according to the present disclosure.
FIG. 4 is a block circuit diagram of two single-phase AC-to-DC conversion circuits according to the present disclosure.
FIG. 5 is a block circuit diagram of one single-phase AC-to-DC conversion circuit according to the present disclosure.
FIG. 6 is a circuit diagram of a low-frequency ripple current cancellation circuit of the present disclosure.
FIG. 7 is a block circuit diagram of a power system with a low-frequency ripple current cancellation function according to the present disclosure.
FIG. 8 is a block circuit diagram of the power system with the low-frequency ripple current cancellation function in operation according to the present disclosure.

### DETAILED DESCRIPTION

Reference will now be made to the drawing figures to describe the present disclosure in detail. It will be understood that the drawing figures and exemplified embodiments of present disclosure are not limited to the details thereof.

The implementation of the present disclosure is described below through specific examples, and those who are familiar with this technology can easily understand other advantages and effects of the present disclosure from the content disclosed in this specification. The present disclosure can also be implemented or applied through other different specific examples, and the details in the present disclosure can also be modified and changed based on different viewpoints and applications without departing from the spirit of the present disclosure.

The structures, proportions, sizes, and number of components shown in the drawings attached to the present disclosure are only used to match the content in the present disclosure, for those who are familiar with this technology to understand and read, and are not used to limit the implementation of the present disclosure. Any modification of structure, change of proportional relationship or adjustment of size shall fall within the scope covered by the technical content disclosed in the present disclosure, provided that it does not affect the effect and purpose of the present disclosure.

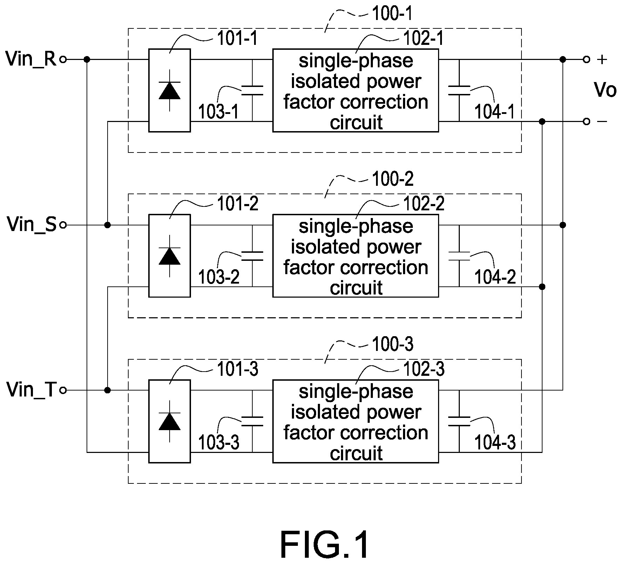

Please refer to FIG. 1, which shows a block circuit diagram of multiple single-phase AC-to-DC conversion circuits according to a first embodiment of the present disclosure. As shown in FIG. 1, a charging system of a three-phase power supply is composed of three single-phase AC-to-DC conversion circuits 100-1, 100-2, 100-3. The three single-phase AC-to-DC conversion circuits 100-1, 100-2, 100-3 are respectively coupled to two phases of the three-phase AC power supply. For example, the first single-phase AC-to-DC conversion circuit 100-1 is coupled to the R-phase and S-phase of the three-phase AC power supply; the second single-phase AC-to-DC conversion circuit 100-2 is coupled to the S-phase and T-phase of the three-phase AC power supply; the third single-phase AC-to-DC conversion circuit 100-3 is coupled to the T-phase and R-phase of the three-phase AC power supply. In the embodiment shown in FIG. 1, the single-phase AC-to-DC conversion circuits form a delta-connected structure. Each single-phase isolated AC-to-DC conversion circuit 100-1, 100-2, 100-3 includes a rectifier circuit 101-1, 101-2, 101-3 and a single-phase isolated power factor correction circuit 102-1, 102-2, 102-3. Specifically, a first single-phase AC-to-DC conversion circuit 100-1 includes a first rectifier circuit 101-1 and a first single-phase isolated power factor correction circuit 102-1; a second single-phase AC-to-DC conversion circuit 100-2 includes a second rectifier circuit 101-2 and a second single-phase isolated power factor correction circuit 102-2; a third single-phase AC-to-DC conversion circuit 100-3 includes a third rectifier circuit 101-3 and a third single-phase isolated power factor correction circuit 102-3.

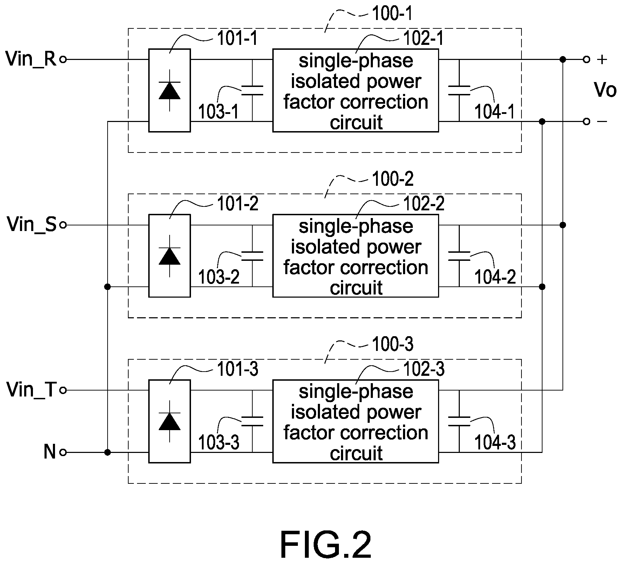

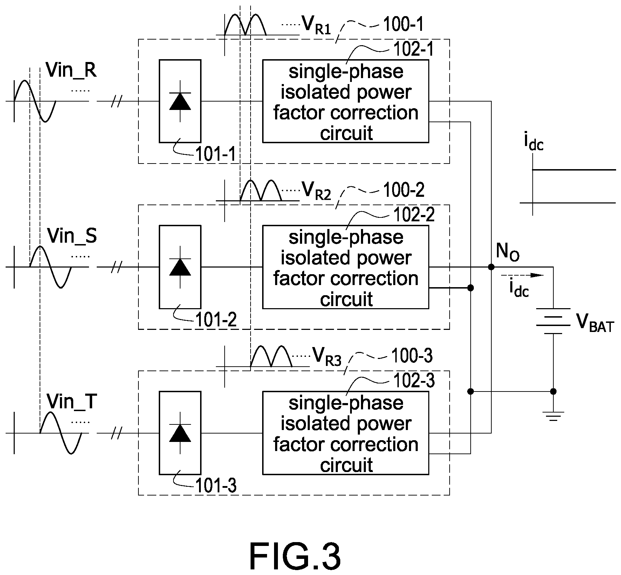

Please refer to FIG. 2, which shows a block circuit diagram of multiple single-phase AC-to-DC conversion circuits according to a second embodiment of the present disclosure. Compared with the embodiment shown in FIG. 1, in the embodiment shown in FIG. 2, the single-phase AC-to-DC conversion circuits form a wye-connected structure. Whether it is the delta-connected structure or the wye-connected structure, it can fully provide the power required under full load or heavy load. Therefore, as shown in FIG. 3, which shows a block circuit diagram of three single-phase AC-to-DC conversion circuits according to the present disclosure. Under a three-phase balanced power supply, three single-phase isolated AC-to-DC conversion circuits are used to convert the three-phase AC power so as to provide a ripple-free DC (output) current i_{dc} as the current required to charge the load (taking a battery V_{BAT} of an electric vehicle as an example).

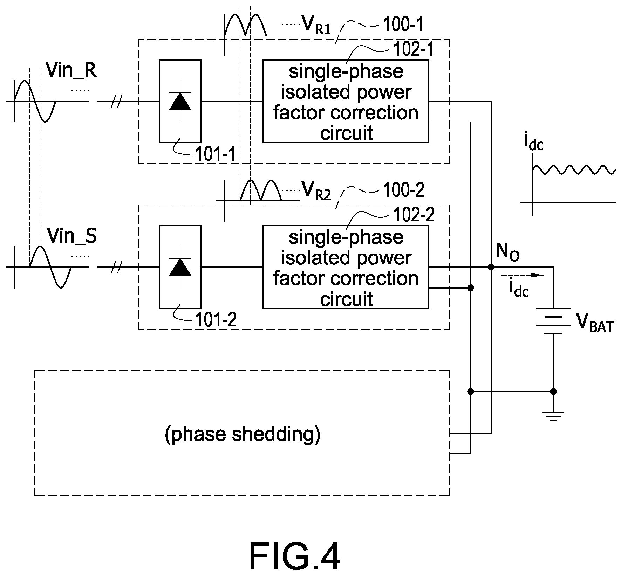

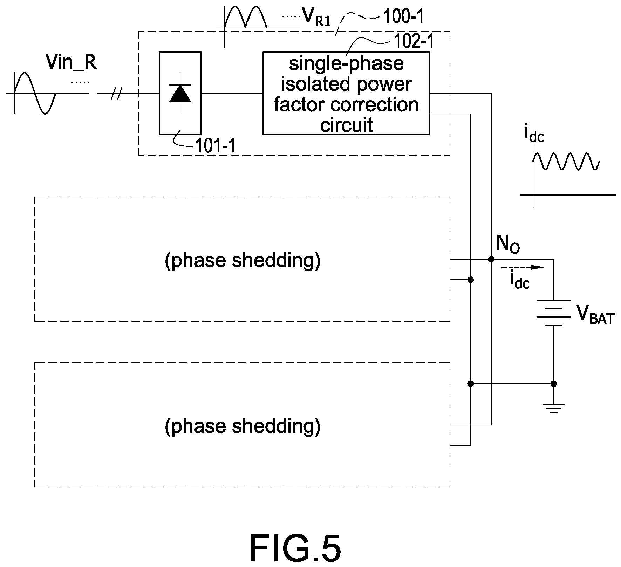

However, as the charging load decreases (for example, to 2/3 of the load output), in order to maintain system efficiency, one single-phase isolated AC-to-DC conversion circuit is usually deactivated to charge the load with lower output power, resulting in phase shedding power supply. However, under this operation condition, due to the asymmetric three-phase power supply, the DC output terminal contains AC components above the harmonics of twice the line frequency (referring to the mains frequency, such as 50Hz or 60Hz). As shown in FIG. 4, the DC (output) current i_{dc} will produce ripple components, which will affect the quality of power supply to the load and even the service life of the load. If the charging load is further reduced (for example, reduced to 1/3 of the load output) or when charging with a light load, the further one single-phase isolated AC-to-DC conversion circuit will be deactivated again. As shown in FIG. 5, however, the ripple component generated by the DC (output) current i_{dc} will be larger.

Incidentally, each single-phase AC-to-DC conversion circuit shown in FIG. 1 and FIG. 2 further includes a first filter capacitor 103-1, 103-2, 103-3 and a second filter capacitor 104-1, 104-2, 104-3. Taking a first single-phase AC-to-DC conversion circuit 100-1 as an example: the first single-phase AC-to-DC conversion circuit 100-1 includes a first filter capacitor 103-1 and a second filter capacitor 104-1, which are respectively coupled to the input side and the output side of the first single-phase isolated power factor correction circuit 102-1. Different from the electrolytic capacitors used in general PFC circuits, purposes of the first filter capacitor 103-1 and the second filter capacitor 104-1 are to filter out AC components above the harmonics of twice the line frequency, and therefore capacitance values of the first filter capacitor 103-1 and the second filter capacitor 104-1 are high and sizes thereof are large.

In comparison, since the three single-phase AC-to-DC conversion circuits 100-1, 100-2, 100-3 of the present disclosure respectively receive two different phases of the three-phase AC power supply, there is no need to process the twice the line frequency. Specifically, the first filter capacitor 103-1 and the second filter capacitor 104-1 of the first single-phase AC-to-DC conversion circuit 100-1 are high-frequency filter capacitors, and the main purpose thereof is to filter out the high-frequency noise generated by the high-frequency switching of the switching components in the first single-phase AC-to-DC conversion circuit 100-1. Therefore, the first filter capacitor 103-1 and the second filter capacitor 104-1 may be realized for capacitor components with low capacitance value and small size. Similarly, the filter capacitors of the second single-phase AC-to-DC conversion circuit 100-2 and the third single-phase AC-to-DC conversion circuit 100-3, they also have the same characteristics, and thus, a detailed discussion will be omitted here.

It can be seen that the ripple components generated by the DC (output) current on the load caused by the deactivating of one or two of single-phase isolated converters have an influence on the system efficiency under conditions of light-load charging. In order to increase the system efficiency, it is therefore proposed that a low-frequency ripple current cancellation circuit and a power system with a low-frequency ripple current cancellation function be used, which are described in detail as follows.

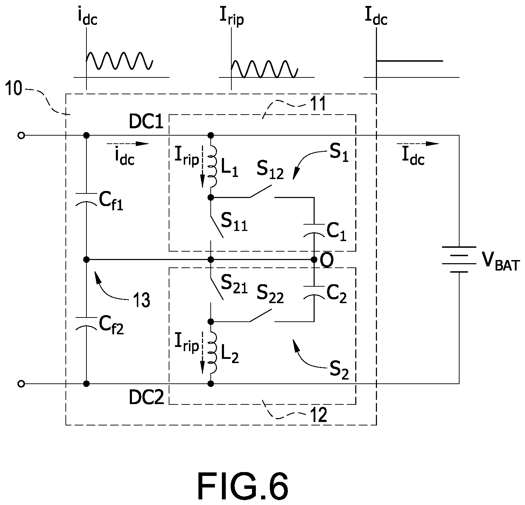

Please refer to FIG. 6, which shows a circuit diagram of a low-frequency ripple current cancellation circuit of the present disclosure. As shown in FIG. 6, the low-frequency ripple current cancellation circuit 10 includes a first step-up circuit 11 and a second step-up circuit 12. The first step-up circuit 11 includes a first inductor L₁, a first switch assembly S₁, and a first capacitor C₁. The second step-up circuit 12 includes a second inductor L₂, a second switch assembly S₂, and a second capacitor C₂.

The first inductor L₁ has a first terminal and a second terminal, and the first terminal of the first inductor L₁ is connected to a first DC side DC1. The first switch assembly S₁ includes a first switch S₁₁ and a second switch S₁₂. The first switch S₁₁ has a first terminal and a second terminal, the first terminal of the first switch S₁₁ is connected to the second terminal of the first inductor L₁, and the second terminal of the first switch S₁₁ is connected to an equal-potential node O. The second switch S₁₂ has a first terminal and a second terminal, the first terminal of the second switch S₁₂ is connected to the second terminal of the first inductor L₁. The first capacitor C₁ has a first terminal and a second terminal. The first terminal of the first capacitor C₁ is connected to the second terminal of the second switch S₁₂, and the second terminal of the first capacitor C₁ is connected to the equal-potential node O.

The second inductor L₂ has a first terminal and a second terminal, and the first terminal of the second inductor L₂ is connected to a second DC side DC2. The second switch assembly S₂ includes a third switch S₂₁ and a fourth switch S₂₂. The third switch S₂₁ has a first terminal and a second terminal, the first terminal of the third switch S₂₁ is connected to the second terminal of the second inductor L₂, and the second terminal of the third switch S₂₁ is connected to the equal-potential node O. The fourth switch S₂₂ has a first terminal and a second terminal, the first terminal of the fourth switch S₂₂ is connected to the second terminal of the second inductor L₂. The second capacitor C₂ has a first terminal and a second terminal. The first terminal of the second capacitor C₂ is connected to the second terminal of the fourth switch S₂₂, and the second terminal of the second capacitor C₂ is connected to the equal-potential node O.

The low-frequency ripple current cancellation circuit 10 receives the DC current i_{dc} with a ripple component Iᵣᵢₚ, and absorbs the ripple component Iᵣᵢₚ through the first step-up circuit 11 and the second step-up circuit 12. Therefore, the aforementioned low-frequency ripple current cancellation circuit 10 allows for the cancellation of the ripple component Iᵣᵢₚ of the DC current i_{dc}.

Incidentally, since the low-frequency ripple current cancellation circuit 10 consists of two sets step-up circuits (i.e., the first step-up circuit 11 and the second step-up circuit 12), and the first capacitor C₁ and the second capacitor C₂ respectively bear the energy of the entire low-frequency ripple, with regard to the ability to withstand voltage or capacitance value, the specification range of selecting the first capacitor C₁ and the second capacitor C₂ can be more extensive and more flexible.

Furthermore, the low-frequency ripple current cancellation circuit 10 further includes a filter circuit 13. The filter circuit 13 includes a first filter capacitor C_{f1} and a second filter capacitor C_{f2}. The first filter capacitor C_{f1} has a first terminal and a second terminal. The first terminal of the first filter capacitor C_{f1} is connected to the first DC side DC1, and the second terminal of the first filter capacitor C_{f1} is connected to the equal-potential node O. The second filter capacitor C_{f2} has a first terminal and a second terminal. The first terminal of the second filter capacitor C_{f2} is connected to the second DC side DC2, and the second terminal of the second filter capacitor C_{f2} is connected to the equal-potential node O.

Specifically, the first filter capacitor C_{f1} and the second filter capacitor C_{f2} are high-frequency filter capacitors, and the main purpose thereof is to filter out the high-frequency switch signal generated by the first switch S₁₁ and the second switch S₁₂ of the first switch assembly S₁, and to filter out the high-frequency switch signal generated by the third switch S₂₁ and the fourth switch S₂₂ of the second switch assembly S₂, and therefore the first filter capacitor C_{f1} and the second filter capacitor C_{f2} can be realized for capacitor components with low capacitance value and small size.

As mentioned above, in order to cancel the ripple component Iᵣᵢₚ of the DC current i_{dc}, the first switch assembly S₁ of the first step-up circuit 11 and the second switch assembly S₂ of the second step-up circuit 12 are controlled as follows. Incidentally, the first switch S₁₁ and the second switch S₁₂ of the first switch assembly S₁ and the third switch S₂₁ and the fourth switch S₂₂ of the second switch assembly S₂ may be controlled by a controller or a control unit. Therefore, the controller or control unit is not shown separately in the drawings and will be explained first.

In particular, the control signals, which are generated from the controller, of controlling the first switch S₁₁ and the second switch S₁₂ of the first switch assembly S₁ are synchronously complementary turned on and turned off, that is, when the first switch S₁₁ is turned on, the second switch S₁₂ is turned off; on the contrary, when the first switch S₁₁ is turned off, the second switch S₁₂ is turned on. In addition, the control signals, which are generated from the controller, of controlling the third switch S₂₁ and the fourth switch S₂₂ of the second switch assembly S₂ are synchronously complementary turned on and turned off, that is, when the third switch S₂₁ is turned on, the fourth switch S₂₂ is turned off; on the contrary, when the third switch S₂₁ is turned off, the fourth switch S₂₂ is turned on.

In one embodiment, the first switch S₁₁ of the first switch assembly S₁ and the third switch S₂₁ of the second switch assembly S₂ are synchronously turned on and turned off. In other words, when the first switch S₁₁ is turned on and the second switch S₁₂ is turned off, the third switch S₂₁ is turned on and the fourth switch S₂₂ is turned off. On the contrary, when the first switch S₁₁ is turned off and the second switch S₁₂ is turned on, the third switch S₂₁ is turned off and the fourth switch S₂₂ is turned on.

In another embodiment, the first switch S₁₁ of the first switch assembly S₁ and the third switch S₂₁ of the second switch assembly S₂ are asynchronously turned on and turned off. Compared with the previous embodiment, the first switch S₁₁ and the third switch S₂₁ are synchronously turned on and turned off, in this embodiment, the first switch S₁₁ and the third switch S₂₁ are asynchronously turned on and turned off, i.e., there is a time difference (phase difference) between the two for control. For example, when the first switch S₁₁ is turned on and the second switch S₁₂ is turned off, after a period of time, the third switch S₂₁ is turned on and the fourth switch S₂₂ is turned off. On the contrary, when the first switch S₁₁ is turned off and the second switch S₁₂ is turned on, after a period of time, the third switch S₂₁ is turned off and the fourth switch S₂₂ is turned on. Accordingly, the cancellation of the ripple component Iᵣᵢₚ of the DC current i_{dc} can be also implemented.

In addition, there are also different embodiments for the selection of the first switch assembly S₁ and the second switch assembly S₂. In one embodiment, as shown in FIG. 6, the first switch S₁₁ and the second switch S₁₂ of the first switch assembly S₁ and the third switch S₂₁ and the fourth switch S₂₂ of the second switch assembly S₂ are transistors. Therefore, all switches can be controlled on and off correspondingly through the control signals generated by the front-end controller to achieve the effect of synchronous rectification.

In another embodiment, not shown, the first switch S₁₁ of the first switch assembly S₁ and the third switch S₂₁ of the second switch assembly S₂ are transistors, and the second switch S₁₂ of the first switch assembly S₁ and the fourth switch S₂₂ of the second switch assembly S₂ are diodes. Therefore, the first switch S₁₁ of the first switch assembly S₁ and the third switch S₂₁ of the second switch assembly S₂ can be controlled to be turned on and turned off correspondingly through the control signal generated by the front-end controller.

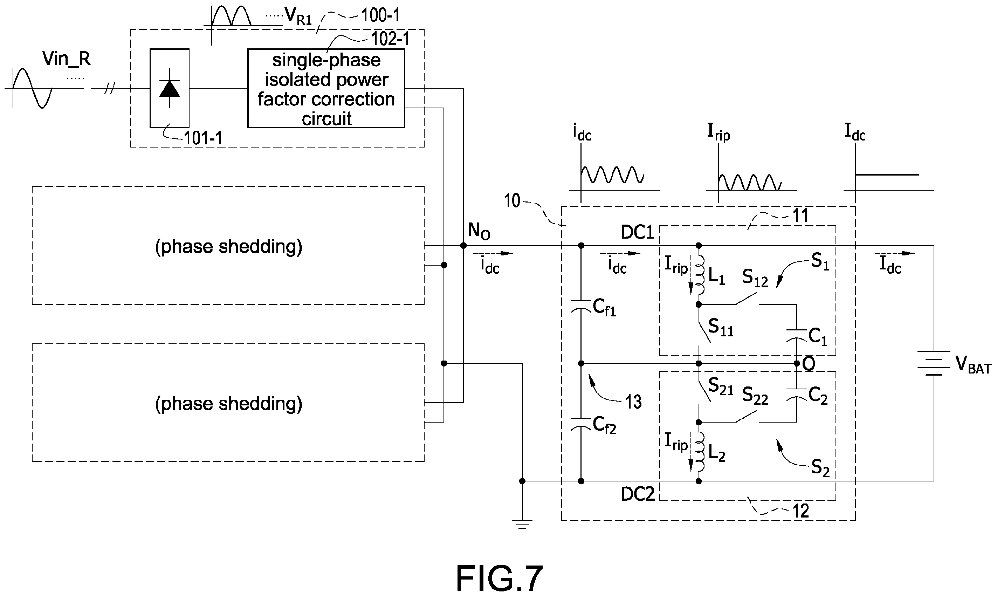

Please refer to FIG. 7, which shows a block circuit diagram of a power system with a low-frequency ripple current cancellation function according to the present disclosure. The power system with the low-frequency ripple current cancellation function (hereafter referred to as "power system") includes three single-phase AC-to-DC conversion circuits 100-1, 100-2, 100-3 (referring to FIG. 3), i.e., a first single-phase AC-to-DC conversion circuit 100-1, a second single-phase AC-to-DC conversion circuit 100-2, and a third single-phase AC-to-DC conversion circuit 100-3. Each single-phase isolated AC-to-DC conversion circuit 100-1, 100-2, 100-3 is correspondingly coupled to each phase AC power supply Vin_R, Vin_S, Vin_T of the three-phase AC power supply (not limited to the delta-connected structure of FIG. 1 or the wye-connected structure of FIG. 2), and the output sides of the three single-phase AC-to-DC conversion circuits 100-1, 100-2, 100-3 are connected in parallel to an output node N_{O} and a ground terminal with a zero potential, and a DC current i_{dc} is outputted from the output node No.

Furthermore, the power system further includes a low-frequency ripple current cancellation circuit 10. Since the low-frequency ripple current cancellation circuit 10 has been described in detail in the previous section, a detailed discussion will be omitted here. The input side of the low-frequency ripple current cancellation circuit 10, i.e., the first DC side DC1 and the second DC side DC2, is connected to the output node N_{O} and the ground terminal individually, and therefore the input side receives the output DC current i_{dc} of the three single-phase AC-to-DC conversion circuits 100-1, 100-2, 100-3.

As shown in FIG. 7, taking the deactivating of two single-phase isolated AC-to-DC conversion circuits (i.e., deactivating the second single-phase AC-to-DC conversion circuit 100-2 and the third single-phase AC-to-DC conversion circuit 100-3) as an example to explain the operation of the low-frequency ripple current cancellation circuit 10 to cancel the ripple component Iᵣᵢₚ of the DC current i_{dc}. According to the disclosure in FIG. 5, it can be known that under the operation of FIG. 7, the ripple component Iᵣᵢₚ of the DC current i_{dc} is large.

The output DC current i_{dc} of the output node N_{O} (that is, the composed output current of the three single-phase AC-to-DC conversion circuits) flows into the first DC side DC1, and is high-frequency filtered by the filter circuit 13, and the filtered output DC current i_{dc} flows into the first step-up circuit 11 and the second step-up circuit 12. As explained above, when the DC current i_{dc} flows into the first step-up circuit 11 and the second step-up circuit 12, by turning on the first switch S₁₁ of the first switch assembly S₁ and turning off the second switch S₁₂, the ripple component Iᵣᵢₚ is stored in the first inductor L₁ through the first switch S₁₁. Afterward, by turning off the first switch S₁₁ of the first switch assembly S₁ and turning on the second switch S₁₂ so that the energy stored in the first inductor L₁ is released to the first capacitor C₁ through the second switch S₁₂.

Similarly, by turning on the third switch S₂₁ of the second switch assembly S₂ and turning off the fourth switch S₂₂, the ripple component Iᵣᵢₚ is stored in the second inductor L₂ through the third switch S₂₁. Afterward, by turning off the third switch S₂₁ of the second switch assembly S₂ and turning on the fourth switch S₂₂ so that the energy stored in the second inductor L₂ is released to the second capacitor C₂ through the fourth switch S₂₂. Accordingly, the ripple component Iᵣᵢₚ of the DC current i_{dc} can be absorbed through the first step-up circuit 11 and the second step-up circuit 12 so that the output current I_{dc} flowing to the load is the DC current without the ripple component Iᵣᵢₚ.

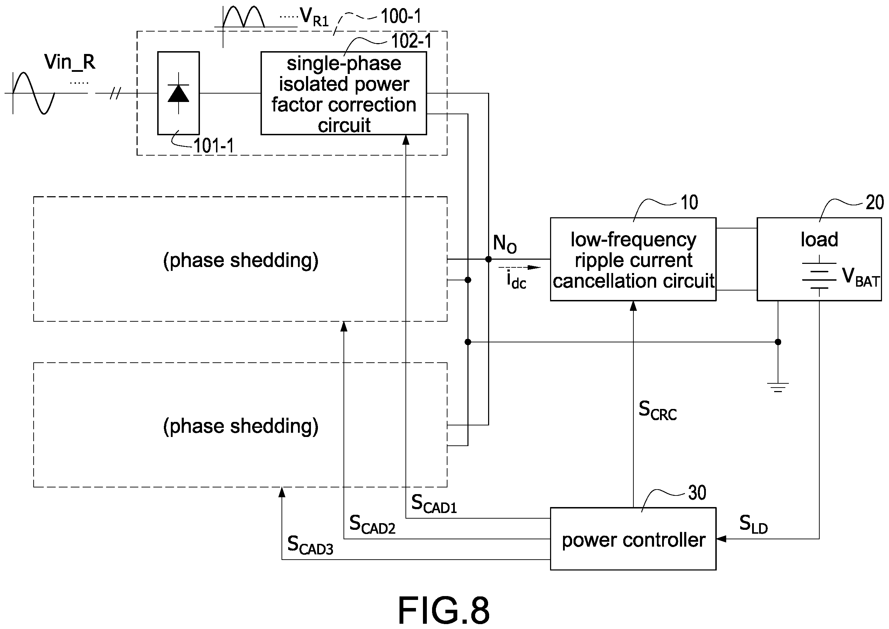

Please refer to FIG. 8, which shows a block circuit diagram of the power system with the low-frequency ripple current cancellation function in operation according to the present disclosure. The power system is used to charge a load 20, where the load 20 may be, for example but not limited to, an electric vehicle (EV). Therefore, the low-frequency ripple current cancellation circuit 10 is electrically connected between the single-phase AC-to-DC conversion circuits 100-1, 100-2, 100-3 and the load 20 to cancel (absorb) the ripple component Iᵣᵢₚ of the DC current i_{dc}. Accordingly, the output current I_{dc} flowing to the load 20 is a DC current without the ripple component Iᵣᵢₚ.

In addition, according to the power supply demand of the load 20, it can be decided to deactivate the number of single-phase AC-to-DC conversion circuits 100-1, 100-2, 100-3 to increase the power supply efficiency of the system. Therefore, the power system includes a power controller 30 for receiving information about the load 20. Taking an electric vehicle as the load 20 as an example, the power controller 30 receives the charging information required by the electric vehicle, which is represented by a load information signal S_{LD}. Therefore, when the power controller 30 realizes the charging information required by the load 20 according to the load information signal S_{LD}, the power controller 30 can provide multiple conversion circuit control signals S_{CAD1}, S_{CAD2}, S_{CAD3} to respectively control the single-phase AC-to-DC conversion circuits 100-1, 100-2, 100-3 to be deactivated or activated. If the charging information is a light load power supply, as shown in FIG. 8, the power controller 30 deactivates the second single-phase AC-to-DC conversion circuit 100-2 and the third single-phase AC-to-DC conversion circuit 100-3, and only the first single-phase AC-to-DC conversion circuit 100-1 is required to provide power.

Moreover, the power controller 30 may also provide a switch control signal S_{CRC} for controlling the first switch assembly S₁ of the first step-up circuit 11 and the second switch assembly S₂ of the second step-up circuit 12, and therefore the first step-up circuit 11 and the second step-up circuit 12 are configured to cancel the ripple component Iᵣᵢₚ of the DC current i_{dc} so that the output current I_{dc} flowing to the load 20 is a DC current without the ripple component Iᵣᵢₚ.

In summary, the present disclosure has the following features and advantages:
1. By using the low-frequency ripple current cancellation circuit, the system efficiency can be maintained during light load requirements, and cancel the ripple component of the DC current so that the output current flowing to the load is a DC current without the ripple component.
2. By using the simple circuit design and control, the low-frequency ripple current cancellation circuit can be implemented.

Although the present disclosure has been described with reference to the preferred embodiment thereof, it will be understood that the present disclosure is not limited to the details thereof. Various substitutions and modifications have been suggested in the foregoing description, and others will occur to those of ordinary skill in the art. Therefore, all such substitutions and modifications are intended to be embraced within the scope of the present disclosure as defined in the appended claims.

## Claims

1. A low-frequency ripple current cancellation circuit (10), **characterized in that** the low-frequency ripple current cancellation circuit (10) comprising:
a first step-up circuit (11) comprising:
a first inductor (L₁) comprising a first terminal and a second terminal, the first terminal of the first inductor (L₁) connected to a first DC side (DC1),
a first switch assembly (S₁) comprising a first switch (S₁₁) and a second switch (S₁₂); the first switch (S₁₁) comprising a first terminal and a second terminal, the first terminal of the first switch (S₁₁) connected to the second terminal of the first inductor (L₁), and the second terminal of the first switch (S₁₁) connected to an equal-potential node (O); the second switch (S₁₂) comprising a first terminal and a second terminal, the first terminal of the second switch (S₁₂) connected to the second terminal of the first inductor (L₁), and
a first capacitor (C₁) comprising a first terminal and a second terminal, the first terminal of the first capacitor (C₁) connected to the second terminal of the second switch (S₁₂), and the second terminal of the first capacitor (C₁) connected to the equal-potential node (O), and
a second step-up circuit (12) comprising:
a second inductor (L₂) comprising a first terminal and a second terminal, the first terminal of the second inductor (L₂) connected to a second DC side (DC2),
a second switch assembly (S₂) comprising a third switch (S₂₁) and a fourth switch (S₂₂); the third switch (S₂₁) comprising a first terminal and a second terminal, the first terminal of the third switch (S₂₁) connected to the second terminal of the second inductor (L₂), and the second terminal of the third switch (S₂₁) connected to the equal-potential node (O); the fourth switch (S₂₂) comprising a first terminal and a second terminal, the first terminal of the fourth switch (S₂₂) connected to the second terminal of the second inductor (L₂), and
a second capacitor (C₂) comprising a first terminal and a second terminal, the first terminal of the second capacitor (C₂) connected to the second terminal of the fourth switch (S₂₂), and the second terminal of the second capacitor (C₂) connected to the equal-potential node (O),
wherein the low-frequency ripple current cancellation circuit (10) receives a DC current (i_{dc}) with a ripple component (Iᵣᵢₚ), and the ripple component (Iᵣᵢₚ) is cancelled by the first step-up circuit (11) and the second step-up circuit (12).

2. The low-frequency ripple current cancellation circuit (10) as claimed in claim 1, further comprising:
a filter circuit (13) comprising:
a first filter capacitor (C_{f1}) comprising a first terminal and a second terminal, the first terminal of the first filter capacitor (C_{f1}) connected to the first DC side (DC1), and the second terminal of the first filter capacitor (C_{f1}) connected to the equal-potential node (O), and
a second filter capacitor (C_{f2}) comprising a first terminal and a second terminal, the first terminal of the second filter capacitor (C_{f2}) connected to the second DC side (DC2), and the second terminal of the second filter capacitor (C_{f2}) connected to the equal-potential node (O).

3. The low-frequency ripple current cancellation circuit (10) as claimed in claim 1, wherein the first switch (S₁₁) and the second switch (S₁₂) of the first switch assembly (S₁) are synchronously complementary turned on and turned off; the third switch (S₂₁) and the fourth switch (S₂₂) of the second switch assembly (S₂) are synchronously complementary turned on and turned off.

4. The low-frequency ripple current cancellation circuit (10) as claimed in claim 1, wherein the first switch (S₁₁) and the second switch (S₁₂) of the first switch assembly (S₁) and the third switch (S₂₁) and the fourth switch (S₂₂) of the second switch assembly (S₂) are transistors.

5. The low-frequency ripple current cancellation circuit (10) as claimed in claim 1, wherein the first switch (S₁₁) of the first switch assembly (S₁) and the third switch (S₂₁) of the second switch assembly (S₂) are transistors, and the second switch (S₁₂) of the first switch assembly (S₁) and the fourth switch (S₂₂) of the second switch assembly (S₂) are diodes.

6. The low-frequency ripple current cancellation circuit (10) as claimed in claim 1, wherein the first switch (S₁₁) of the first switch assembly (S₁) and the third switch (S₂₁) of the second switch assembly (S₂) are synchronously turned on and turned off.

7. The low-frequency ripple current cancellation circuit (10) as claimed in claim 1, wherein the first switch (S₁₁) of the first switch assembly (S₁) and the third switch (S₂₁) of the second switch assembly (S₂) are asynchronously turned on and turned off.

8. A power system with a low-frequency ripple current cancellation function, **characterized in that** the power system comprising:
three single-phase AC-to-DC conversion circuits (100-1, 100-2, 100-3), each AC-to-DC conversion circuit (100-1, 100-2, 100-3) correspondingly coupled to each phase of a three-phase AC power supply, and an output side of the AC-to-DC conversion circuit (100-1, 100-2, 100-3) connected to an output node and a DC current (i_{dc}) outputted from the output node (N_{O}), and
a low-frequency ripple current cancellation circuit (10) comprising:
a first step-up circuit (11) comprising a first inductor (L₁), a first switch assembly (S₁), and a first capacitor (C₁); the first switch assembly (S₁) comprising a first switch (S₁₁) and a second switch (S₁₂); the first inductor (L₁) connected to the first switch (S₁₁) at a first common node, and connected between a first DC side (DC1) and an equal-potential node (O); the second switch (S₁₂) connected to the first capacitor (C₁) in series, and connected between the first common node and the equal-potential node (O), and
a second step-up circuit (12) comprising a second inductor (L₂), a second switch assembly (S₂), and a second capacitor (C₂); the second switch assembly (S₂) comprising a third switch (S₂₁) and a fourth switch (S₂₂); the second inductor (L₂) connected to the third switch (S₂₁) at a second common node, and connected between a second DC side (DC2) and the equal-potential node (O); the fourth switch (S₂₂) connected to the second capacitor (C₂) in series, and connected between the second common node and the equal-potential node (O).

9. The power system with the low-frequency ripple current cancellation function as claimed in claim 8, wherein
the first inductor (L₁) comprises a first terminal and a second terminal, the first terminal of the first inductor (L₁) is connected to the first DC side (DC1); the first switch (S₁₁) comprises a first terminal and a second terminal, the first terminal of the first switch (S₁₁) is connected to the second terminal of the first inductor (L₁), and the second terminal of the first switch (S₁₁) is connected to the equal-potential node (O); the second switch (S₁₂) comprises a first terminal and a second terminal, the first terminal of the second switch (S₁₂) is connected to the second terminal of the first inductor (L₁); the first capacitor (C₁) comprises a first terminal and a second terminal, the first terminal of the first capacitor (C₁) is connected to the second terminal of the second switch (S₁₂), and the second terminal of the first capacitor (C₁) is connected to the equal-potential node (O),
the second inductor (L₂) comprises a first terminal and a second terminal, the first terminal of the second inductor (L₂) is connected to the second DC side (DC2); the third switch (S₂₁) comprises a first terminal and a second terminal, the first terminal of the third switch (S₂₁) is connected to the second terminal of the second inductor (L₂), and the second terminal of the third switch (S₂₁) is connected to the equal-potential node (O); the fourth switch (S₂₂) comprises a first terminal and a second terminal, the first terminal of the fourth switch (S₂₂) is connected to the second terminal of the second inductor (L₂); the second capacitor (C₂) comprises a first terminal and a second terminal, the first terminal of the second capacitor (C₂) is connected to the second terminal of the fourth switch (S₂₂), and the second terminal of the second capacitor (C₂) is connected to the equal-potential node (O).

10. The power system with the low-frequency ripple current cancellation function as claimed in claim 8, wherein as a load (20) supplied by the single-phase AC-to-DC conversion circuits (100-1, 100-2, 100-3) decreases, one or more single-phase AC-to-DC conversion circuits (100-1, 100-2, 100-3) are deactivated.

11. The power system with the low-frequency ripple current cancellation function as claimed in claim 10, further comprising:
a power controller (30) configured to receive information of the load (20),
wherein based on the decrease of the load (20), the power controller (30) is configured to deactivate one or more single-phase AC-to-DC conversion circuits (100-1, 100-2, 100-3), and activate the low-frequency ripple current cancellation circuit (10).

12. The power system with the low-frequency ripple current cancellation function as claimed in claim 8, wherein the single-phase AC-to-DC conversion circuits (100-1, 100-2, 100-3) are configured to charge a battery (V_{BAT}) of an electric vehicle.

13. The power system with the low-frequency ripple current cancellation function as claimed in claim 8, wherein the single-phase AC-to-DC conversion circuits (100-1, 100-2, 100-3) form a delta-connected structure, or the single-phase AC-to-DC conversion circuits (100-1, 100-2, 100-3) form a wye-connected structure.

14. The power system with the low-frequency ripple current cancellation function as claimed in claim 8, wherein the first switch (S₁₁) and the second switch (S₁₂) of the first switch assembly (S₁) are synchronously complementary turned on and turned off; the third switch (S₂₁) and the fourth switch (S₂₂) of the second switch assembly (S₂) are synchronously complementary turned on and turned off.

15. The power system with the low-frequency ripple current cancellation function as claimed in claim 8, wherein the first switch (S₁₁) of the first switch assembly (S₁) and the third switch (S₂₁) of the second switch assembly (S₂) are synchronously turned on and turned off.
